# EUROPEAN PATENT SPECIFICATION

(11) **EP 2 745 547 B1**
(45) Date of publication and mention of the grant of the patent: **09.01.2019**
(21) Application number: 12852919.5
(22) Date of filing: 11.09.2012
(51) Int. Cl.: H04W 24/00, H04L 12/24, H04W 24/08

(54) **APP DRIVEN BASE STATION MAN-MACHINE INTERFACE**
APP-ANGETRIEBENE BASISSTATION MIT MENSCH-MASCHINE-SCHNITTSTELLE
INTERFACE HOMME-MACHINE DE STATION DE BASE COMMANDÉE PAR APPLICATION

(30) Priority: 28.11.2011 US 201113305457
(43) Date of publication of application: 25.06.2014
(73) Proprietor: Telefonaktiebolaget LM Ericsson (publ), 164 83 Stockholm (SE)
(72) Inventor: SCHÖN, Lennart, S-172 72 Sundbyberg (SE)
(74) Representative: Brann AB
(86) International application number: PCT/SE2012/050954
(87) International publication number: WO 2013/081524

(56) References cited:
- EP-A1- 1 873 646
- EP-A2- 0 967 817
- EP-A2- 1 235 446
- EP-A2- 1 235 446
- US-A1- 2010 228 854
- US-A1- 2011 077 802
- Anonymous: "Electromagnetic shielding - Wikipedia, the free encyclopedia", , 18 October 2011 (2011-10-18), XP055444133, Retrieved from the Internet: URL:https://web.archive.org/web/2011101809 3822/https://en.wikipedia.org/wiki/Electro magnetic_shielding [retrieved on 2018-01-24]
- Rizwan Majeed Khan: "Remote BTS Monitoring Solutions", , 19 September 2011 (2011-09-19), XP055504679, Retrieved from the Internet: URL:https://www.slideshare.net/Rizwanmajee d/asentria-remote-monitoring-solutions [retrieved on 2018-09-05]

## Description

### TECHNICAL FIELD

The invention is related to network operations and more particularly to interpreting detected errors in network equipment.

### BACKGROUND

Base stations in mobile telecommunication systems are well known. A network supervising system or operational support system (OSS) of a base station monitors the activity within a telecommunications network. If traffic disruptions are encountered within the network, the OSS can, for example, restart the equipment that facilitates communication within the network.

In many cases, however, this is inadequate in correcting problems within the network and a site visit to a base station by a service engineer or technician is needed. Initially, the engineer typically checks for physical defects or damages to the base station. If no physical defect or damage is detected, the individual units that form (or are part of) the base station may be evaluated. The functional units can include radio units (RUs), digital units (DUs) and power distribution devices for example.

Each of these units has a fault indication panel associated with it. The panel may indicate the operational status of the corresponding unit. The status can be represented by a code or the illumination of one or more of a combination of light emitting diodes (LEDs) of various colors (e.g. green, yellow, red and blue). A green LED may indicate proper functioning of all units. A combination of blinking yellow LEDs may indicate different errors in the unit(s).

Since the interface between a service engineer and the base station where the status is displayed is based on a limited number of LEDs, the service engineer may not know all the codes or combination of LEDs that represent various conditions of the units.

In such situations, the simplest solution is to replace the unit. The replacement of units can be an expensive proposition as the replaced (i.e. removed) unit is typically sent to a repair center and if no problems are found, it is sent back to the unit owner. Units that are determined not to have any problems (i.e. so called no fault found or NFF) and returned to the owner are usually the most expensive units for the owner. A technique for maintaining a base station is presented in EP application 1 235 446 A2. A maintenance terminal communicates with the maintenance unit of the base station. The maintenance unit receives maintenance information and transmits the maintenance information to the maintenance terminal, which is monitored by the operator. Also, the maintenance unit receives a control data from maintenance terminal and controls a circuit operation of the base station.

In some settings, the units are not easily accessible as they may be protected from, for example, vandalism, etc. The units can also be not easily accessible if mounted on a mast.

What is desired, therefore, is an improved mechanism for interpreting detected operational states of various units comprising a base station.

### SUMMARY

It should be emphasized that the terms "comprises" and "comprising", when used in this specification, are taken to specify the presence of stated features, integers, steps or components; but the use of these terms does not preclude the presence or addition of one or more other features, integers, steps, components or groups thereof.

The invention is defined by a user equipment according to claim 1 and a method according to claim 10. Further embodiments are set out in the dependent claims. In accordance with an exemplary embodiment, a user equipment is disclosed. The user equipment comprises: a transceiver for communicating with a base station via a wireless communication link; a memory for storing information corresponding to units of the base station; a processor for interpreting an error message received from a unit of the base station by comparing the received message with the stored information; and a display for displaying the error.

In accordance with another exemplary embodiment, a network node is disclosed. The network node comprises: a plurality of units for indicating an operational state of the network; and a transceiver for communicating the indication via a wireless communication link, wherein the indication is an error code.

In accordance with yet another exemplary embodiment, a method for detecting errors in a communication network is disclosed. The method comprising the steps of: establishing a communication link by a user equipment with a unit of a base station; obtaining information from the unit, the information corresponding to an operational status of the unit; comparing the received information with an information source; interpreting the received information based on the comparison; and recommending an appropriate action based on errors determined by the interpretation.

In accordance with a further exemplary embodiment, a method of detecting errors in a communication network is disclosed. The method comprises: monitoring an operational state of a plurality of components of the communication system; detecting a user equipment; communicating the represented monitored state to the user equipment via a wireless communication link; and displaying the represented monitored state on the user equipment.

### BRIEF DESCRIPTION OF THE DRAWINGS

The objects and advantages of the invention will be understood by reading the following detailed description in conjunction with the drawings in which:
FIG. 1 illustrates a communication device communicating with an outdoor base station in accordance with exemplary embodiments;
FIG. 2 illustrates a communication device communicating with a single PIU (Plug In Unit) of a base station in accordance with exemplary embodiments;
FIG. 3 illustrates a communication device communicating with a mast mounted base station in accordance with exemplary embodiments;
FIG. 4 illustrates a communication device communicating with a single unit of a mast mounted base station in accordance with exemplary embodiments;
FIG. 5 illustrates a communication device communicating with a common communication unit in accordance with exemplary embodiments;
FIG. 6 illustrates a method in accordance with exemplary embodiments;
FIG. 7 illustrates a user equipment in accordance with exemplary embodiments; and
FIG. 8 illustrates a method in accordance with exemplary embodiments.

### DETAILED DESCRIPTION

The various features of the invention will now be described with reference to the figures, in which like parts are identified with the same reference characters.

The various aspects of the invention will now be described in greater detail in connection with a number of exemplary embodiments. To facilitate an understanding of the invention, many aspects of the invention are described in terms of sequences of actions to be performed by elements of a computer system or other hardware capable of executing programmed instructions. It will be recognized that in each of the embodiments, the various actions could be performed by specialized circuits (e.g., analog and/or discrete logic gates interconnected to perform a specialized function), by one or more processors programmed with a suitable set of instructions, or by a combination of both. The term "circuitry configured to" perform one or more described actions is used herein to refer to any such embodiment (i.e., one or more specialized circuits and/or one or more programmed processors).

Moreover, the invention can additionally be considered to be embodied entirely within any form of computer readable carrier, such as solid-state memory, magnetic disk, or optical disk containing an appropriate set of computer instructions that would cause a processor to carry out the techniques described herein. Thus, the various aspects of the invention may be embodied in many different forms, and all such forms are contemplated to be within the scope of the invention. For each of the various aspects of the invention, any such form of embodiments as described above may be referred to herein as "logic configured to" perform a described action, or alternatively as "logic that" performs a described action.

In exemplary embodiments, methods, apparatus and systems are disclosed for interpreting detected operational status of units within a base station. Exemplary embodiments may provide "on the fly" interpretation of various error codes associated with the operational status of a plurality of units that are part of a base station.

A communication device having wireless communication capability for communicating with the various units of a base station to obtain the operational status codes (of the units) is disclosed. In exemplary embodiments, an application for interpreting the status codes may be made available to, or stored in, the device. The computing or processing capabilities of the device may be utilized to obtain a greater understanding of the codes than what can be conveyed by the status panels of units of a base station.

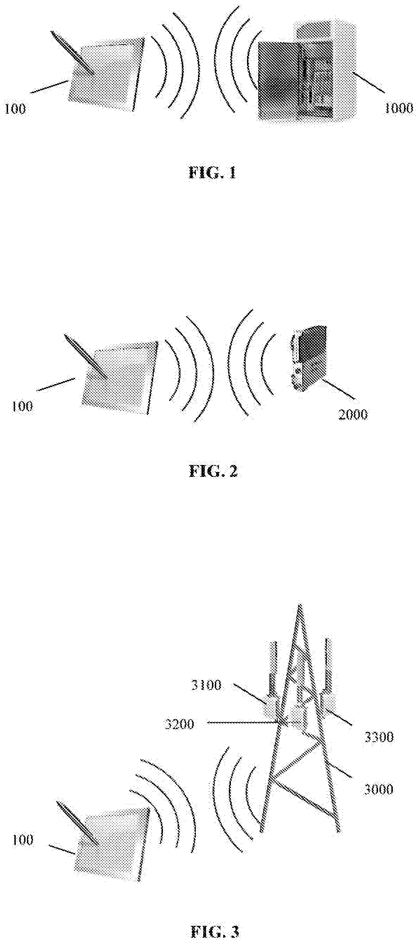

The units of a base station may be implemented in various arrangements such as those illustrated in FIGs. 1-5 for communicating with a communication device. In FIG. 1, base station 1000 may be an outdoor base station.

A wireless communication link may be established between base station 1000 and a communication device 100. More specifically, base station 1000 may comprise a plurality of units such as the plug in unit (PIU) 2000 as illustrated in FIG. 2. A wireless communication link may be established between the communication device 100 and PIU 2000.

While base station 1000 of FIG. 1 is illustrated with an open door, the door can also be closed while permitting (or maintaining) wireless communication between base station 1000 and communication device 100. Furthermore, base station 1000 may be located at ground level or can be located on the rooftop of a building.

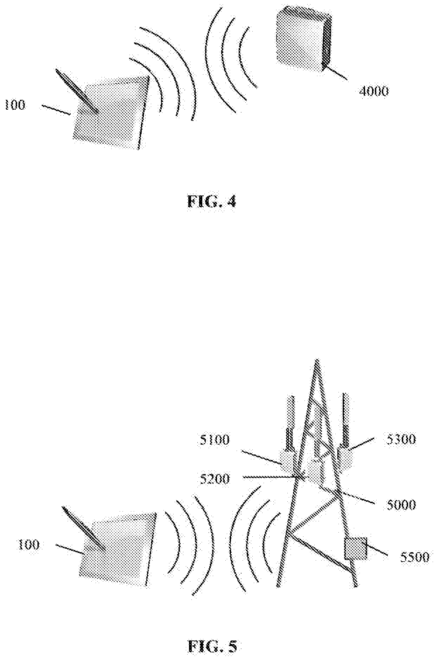

A base station may also be implemented as a mast mounted unit such as on mast 3000 as illustrated in FIG. 3. More specifically, a plurality of units, such as units 3100, 3200 and 3300 that are part of the base station, may be mounted on the mast. As illustrated in FIG. 4, a wireless communication link may be established between communication device 100 and mast mounted unit 4000 (representing any of units 3100, 3200 and 3300). The communication link may be established while the communication device 100 is at ground level (and not on the mast).

The units within a base station are typically shielded and therefore direct physical access to the equipment is not desirable. Each unit may, therefore, have a transceiver and an antenna for communicating the operational status as a radio signal to communication device 100. The units may also submit their identity. The antenna may not be shielded. The units could respond to commands to determine proper functioning of the units. In some instances, problems with the units may result from a loose cable which can be corrected easily. The unit may then be tested by transmitting a signal (a testing program for example) by the communication device to the unit. The unit may respond by indicating its proper functioning via an appropriate code.

In some embodiments, a transceiver/antenna may not be desirable for each unit of a base station. In such implementation, each of the units may include ports such as a universal serial bus (USB), a RJ-45 or a similar port. The port may facilitate a (wired) connection of the units at a base station via a hub to a transceiver and an antenna. Each unit within the base station may submit its operational status to the transceiver via the hub. In addition to the operational status, the identity of the (individual) submitting unit may also be sent to the "central" transceiver/antenna (i.e. central for that base station) for transmitting a radio signal to communication device 100.

As illustrated in FIG. 5, units 5100, 5200 and 5300 (corresponding to units 3100, 3200 and 3300 of FIG. 3) may submit their respective operational status to transceiver 5500. The connection between each of the units (5100, 5200 and 5300) and transceiver 5500 may be a wired connection for example. A wireless communication link may be established between transceiver 5500 and communication device 100.

Transceiver 5500 may include a log of operational status information received from each of units 5100, 5200 and 5300. This information may be accessed by communication device 100. In some embodiments, the units may be programmed to either provide the operational status periodically or when a problem is detected and/or encountered. If no problem exists and the units are programmed to provide this information periodically, the units can also communicate a positive code to communication device 100 or to transceiver 5500 indicating that no problems exist. The communication device can instruct transceiver 5500 to obtain information from units 5100, 5200 and 5300 in some embodiments.

In the embodiment described with reference to FIG. 5, communication device 100 can instruct transceiver 5500, based on analyzing information received from the transceiver, to establish a link between communication device 100 and any faulty unit within the units 5100, 5200 and 5300. This may result in communication utilizing both the wireless link between communication device 100 and transceiver 5500 and (wired) connection between transceiver 5500 and units 5100, 5200 and 5300.

One unit of a base station (such as 3100, 3200, 3300 of FIG. 3) can communicate with communication device 100 at a time. Communication device 100 may be a mobile device such as a smartphone or a portable computing device such as a tablet, a notebook or a similar device with wireless communication capability.

The wireless interface (between communication device 100 and the units) may be Wi-Fi, Bluetooth, near field communication (NFC) or a similar type of communication protocol. The communication device 100 can also communicate with the units via "normal" connection such as GSM, WCDMA, LTE, etc.

The codes received from the individual units (3100, 3200, 3300) or from the transceiver (5500) may be interpreted by accessing code information that is available to communication device 100.

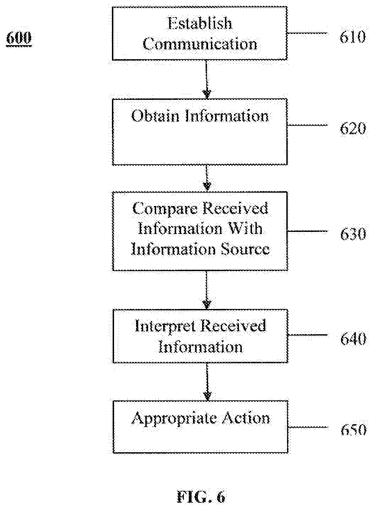

A method in accordance with exemplary embodiments may be described with reference to FIG. 6. A communication device or user equipment (UE) 100 may establish a wireless communication link with a unit at 610. The unit may be a single one of a plurality of units at a base station (such as units 3100, 3200, 3300 of FIG. 3) or it may be a transceiver (5500 of FIG. 5). Communication device 100 may retrieve or obtain operational status information from the unit at 620. The information can be retrieved based on a request from communication device 100 or upon establishing the communication link. An identity of the unit providing the code may also be received.

The retrieved information (e.g. a code) may be searched for within a reference source at 630. The source may be pre-stored in device 100 in some embodiments. If the code cannot be matched with information pre-stored in device 100, device 100 may access a database at a network location for the reference source. This network location may be accessible via the internet for example. The reference source may include, for example, a user manual for the particular unit or for the base station. The reference source can also simply be a table of codes and their associated meaning(s) and/or conditions, etc. The reference source can also be downloaded to the communication device.

An interpretation for the code may be obtained at 640. The interpretation may result in obtaining a description of the received code(s) in a form that is readily comprehended by service personnel such as in plain text, an illustration (drawings, images, etc) or a combination thereof. For purposes of simplification, the term "natural language" is used herein to indicate plain text, illustrations or the combination thereof.

Based on the interpretation, an appropriate action may be taken at 650. The interpretation may provide links to other network locations or to other portions of a user manual where the appropriate action(s) may be specified. This may include resetting the unit (i.e. powering "down" the unit and then powering "up" the unit) or requesting that it be replaced for example. In some instances where an intermittent contact between units may show up as errors and become critical for operators, the units need not be replaced. This may also include having links in the interpretation enabling the service personnel to easily order the appropriate/correct spare parts.

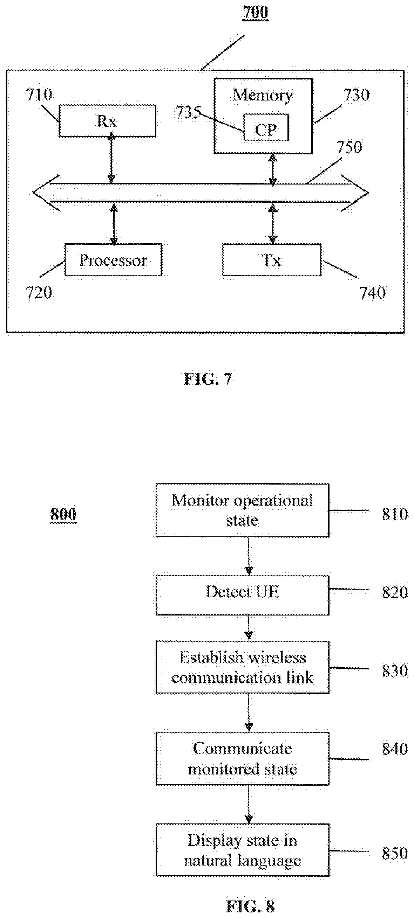

An exemplary user equipment 700 (such as communication device 100 for example) is illustrated in FIG. 7. UE 700 may include, inter alia, a receiving means 710, a processor 720, a computer readable medium 730 in the form of memory and a transmitting means 740. The receiving means and the transmitting means may be combined and referred to as a transceiver or a communication interface. The transceiver or the communication interface may include separate receiving and transmitting modules.

Receiving means 710 may receive information from individual units (3100, 3200, 3300 of FIG. 3) or from transceiver 5500 (of FIG. 5) for example. Processor 720 may compare the received information with information pre-stored in memory 730 and determine an appropriate action. Transmitting means 740 may transmit a reset command for example. Receiving means 710, processor 720, memory 730 and transmitting means 740 may be interconnected via a bus 750.

In one embodiment, in order for the processor 720 to be able to perform the steps illustrated in FIG. 6, memory 730 comprises a computer program (CP) 735 with computer program modules which when run by the processor 720 causes the user equipment 700 to perform all or some of the steps illustrated in FIG. 6.

Mobile device based Apps (i.e. mobile applications) may also be utilized in some embodiments to analyze (i.e. interpret) the received codes and to make recommendations of appropriate actions to be taken. The base station may also be referred to as a network node. The user equipment or communication device and various other devices highlighted in exemplary embodiments may be compliant with the digital living network alliance (DLNA) standards to facilitate interoperability.

In other embodiments, a method 800 of detecting errors in a communication network is disclosed. The operational state of a plurality of components of the network may be monitored at 810. A user equipment or communication device may be detected at 820. A wireless communication link may be established with the communication device at 830. The monitored state may be communicated to the user equipment via the wireless communication link at 840. The communicated state information may be displayed on the user equipment in a natural language (i.e. plain text, illustrations or a combination thereof as described above).

The communication between the communication device and the units of the base station may be secured using known authentication methods. Authentication keys for units that are to be tested may be made available to an authorized communication device prior to use of the communication device in obtaining information from the units. When the communication device gets in close proximity of a unit to be evaluated, the pre-stored key may be recognized and communication may be established between a communication device and the units of the base station.

In some embodiments, the various LED combinations indicated on status panels of the units of a base station may be displayed on the communication device. That is, the information may be replicated or emulated on the display of the communication device. This may include utilizing a combination of colors such as red, green, yellow and blue or any other colors. The status can also be transmitted as a code for display in a natural language.

Exemplary embodiments as described above may be equally applicable for other mast mounted devices, such as antennas, antenna line devices (ALDs) and devices comprising radio communication equipment capable of performing more advanced tasks in the radio communication network such as remote radio units (RRUs). An ALD is a generic term for an addressable physical device, such as an antenna driver or amplifier. A particular ALD can be identified by its global unique identifier.

Exemplary embodiments may also be applicable in capsule sites or tower tubes such as, for example, masts and/or towers where the base station is placed within the mast at the top, at the bottom or at another level within the mast. Exemplary embodiments may also be utilized to detect errors in base stations implementing antenna integrated radio (AIR). Embodiments as described herein may be implemented within GSM, 3G or LTE/4G standards utilizing network nodes, NodeBs, eNodeBs, etc.

Several advantages may be realized by exemplary embodiments. The number of returned units can be reduced. The (error or status) messages can be clearly described in the communication device so more advanced fault handling (i.e. more than simply replacing units for example) can be accomplished on site. Written manuals can be avoided. The need for training on constantly changing and expanding code is obviated. The service engineer need not use an electrical connector. The UE or communication device can be updated with new manuals or latest changes over a network. The devices can provide a direct link to a central service locations for on-line help. As described above, links may also be provided to enable ordering parts via a "click to buy" or similar button on a user interface and therefore, obviate the need for having to write down part numbers or having to order from the office, etc. Such functionality as described in exemplary embodiments may also be used as a distinguishing selling point to operators.

If an upgrade occurs on the site, a new download can be sent to the service engineer or to his or her communication device so the latest information is obtained. Safety of the service engineers can also be increased as climbing can be avoided to access mast mounted base stations.

Due to the prevalent use of communication devices, the ease of use provided by exemplary embodiments ensures that the communication device will be used more readily as the increased efficiency reduces the need for service personnel to replace units due information that is limited or in a format that is not easily comprehended.

The invention has been described with reference to particular embodiments. However, it will be readily apparent to those skilled in the art that it is possible to embody the invention in specific forms other than those of the embodiment described above. The described embodiments are merely illustrative and should not be considered restrictive in any way. The scope of the invention is given by the appended claims, rather than the preceding description, and all variations and equivalents which fall within the scope of the claims are intended to be embraced therein.

## Claims

1. A user equipment (100, 700) comprises:
a transceiver (710, 740) configured to communicate with a network node via a wireless communication link, wherein the transceiver (710, 740) comprises:
a receiving means (710) configured to retrieve an operational status information from a unit of a plurality of units of the network node, wherein the operational status information is an error code; and
a transmitting means (740);
a memory (730) configured to store information corresponding to the plurality of units of the network node;
a processor (720) configured to :
compare the error code with the stored information and interpret the error code retrieved from the unit of the network node by said comparison, wherein the obtained interpretation results in the processor (720) being further configured to obtain a description of the retrieved error code in a natural language, and wherein the natural language comprises indications of plain text and illustrations, either alone or in combination; and
determine an appropriate action of appropriate action(s), in response to said comparison, using the interpretation, wherein the obtained interpretation provides links to portions of a user manual where the appropriate action(s) are specified, and wherein the determined appropriate action comprises resetting the unit or requesting the unit to be replaced; and
a display configured to display the description of the error code in the natural language, wherein the transmitting means (740) is configured to transmit a command, corresponding to the determined appropriate action, to the unit of the network node.

2. The user equipment (100, 700) of claim 1, wherein the transceiver (710, 740) communicates with the unit of the network node by establishing an authenticated communication with the unit of the network node.

3. The user equipment (100, 700) of claim 1, wherein the transceiver (710, 740) communicates with a device connected to the plurality of units of the network node, wherein the transceiver (710, 740) further communicates with a remote location to download an application for providing a user interface on the user equipment (100, 700), and wherein the user interface is for displaying the interpretation of the error code.

4. A system comprises:
- a network node further comprising:
a plurality of units (3100, 3200, 3300, 5100, 5200, 5300) configured to indicate operational status information of the plurality of units (3100, 3200, 3300, 5100, 5200, 5300) of the network node; and
a transceiver (5500) configured to communicate the indication via a wireless communication link, wherein the indication is communicated as an error code to a user equipment (100, 700); and
- a user equipment (100, 700) according to claim 1.

5. The system of claim 4, wherein each of the plurality of units (3100, 3200, 3300, 5100, 5200, 5300) are associated with the transceiver (710, 740).

6. The system of claim 4, further comprising:
a device connected to each of the plurality of units (3100, 3200, 3300, 5100, 5200, 5300) and to the transceiver (710, 740), wherein the device receives the operational status information from each of the plurality of units (3100, 3200, 3300, 5100, 5200, 5300).

7. The system of claim 6, wherein the operational status information received from the device includes an identity of a unit, of the plurality of units (3100, 3200, 3300, 5100, 5200, 5300), associated with the received operational status information.

8. The system of claim 6, wherein retrieving the operational status information from a unit of the plurality of units (3100, 3200, 3300, 5100, 5200, 5300) of the network node further comprises retrieving an identity of the unit.

9. The system of claim 4, wherein each of the plurality of units (3100, 3200, 3300, 5100, 5200, 5300) are shielded from radio signal interference.

10. A method performed by a user equipment, for detecting errors in a network node, the method comprising the steps of:
establishing a wireless communication link by the user equipment with a unit of a plurality of units of the network node;
retrieving an operational status information from the unit, the operational status information being an error code;
comparing the error code with a stored information;
obtaining an interpretation of the error code retrieved from the unit by said comparing, wherein obtaining the interpretation results in obtaining a description of the retrieved error code in a natural language, and wherein the natural language comprises indications of plain text and illustrations, either alone or in combination;
determining an appropriate action of appropriate action(s), in response to said comparing, using the obtained interpretation, wherein the obtained interpretation provides links to portions of a user manual where the appropriate action(s) are specified, and wherein the determined appropriate action comprises resetting the unit or requesting the unit to be replaced;
displaying the description of the operational status information of the unit in the natural language; and
transmitting a command, corresponding to the determined appropriate action, to the unit of the network node.

11. The method of claim 10, wherein the method further comprising the step of recommending the appropriate action determined using the interpretation.

12. The method of claim 10, wherein the stored information is stored within the user equipment.

13. The method of claim 10, wherein the stored information is at a network accessible location.

14. The method of claim 10, further comprising:
obtaining operational status information from the plurality of units via a device connected to the plurality of units of the network node.

15. The method of claim 10, wherein the operational status information is an indication of a defect in a part of the unit and the transmitted command comprises recommending obtaining a replacement part.

## Patentansprüche

1. Benutzergerät (100, 700), umfassend:
einen Sendeempfänger (710, 740), der konfiguriert ist, um über eine drahtlose Kommunikationsverbindung mit einem Netzknoten zu kommunizieren, wobei der Sendeempfänger (710, 740) Folgendes umfasst:
ein Empfangsmittel (710), das konfiguriert ist, um Betriebsstatusinformationen aus einer Einheit aus einer Vielzahl von Einheiten des Netzknotens abzurufen, wobei die Betriebsstatusinformationen ein Fehlercode sind; und ein Sendemittel (740);
einen Speicher (730), der konfiguriert ist, um Informationen entsprechend der Vielzahl von Einheiten des Netzknotens zu speichern;
einen Prozessor (720), der für Folgendes konfiguriert ist:
Vergleichen des Fehlercodes mit den gespeicherten Informationen und Interpretieren des aus der Einheit des Netzknotens abgerufenen Fehlercodes durch den Vergleich, wobei die erhaltene Interpretation dazu führt, dass der Prozessor (720) ferner konfiguriert ist, um eine Beschreibung des abgerufenen Fehlercodes in einer natürlichen Sprache zu erhalten und wobei die natürliche Sprache Angaben aus reinem Text und Veranschaulichungen umfasst, entweder alleine oder in Kombination; und
Bestimmen einer angemessener Maßnahme aus angemessener/angemessenen Maßnahme(n) als Reaktion auf den Vergleich, unter Verwendung der Interpretation, wobei die erhaltene Interpretation Verbindungen zu Abschnitten eines Benutzerhandbuchs bereitstellt, in dem die angemessene(n) Maßnahme(n) spezifiziert ist/sind, und wobei die bestimmte angemessene Maßnahme das Zurücksetzen der Einheit oder das Anfordern, dass die Einheit ausgetauscht wird, umfasst; und
eine Anzeige, die konfiguriert ist, um die Beschreibung des Fehlercodes in der natürlichen Sprache anzuzeigen, wobei das Sendemittel (740) konfiguriert ist, um einen Befehl entsprechend der bestimmten angemessenen Maßnahme an die Einheit des Netzknotens zu senden.

2. Benutzergerät (100, 700) nach Anspruch 1, wobei der Sendeempfänger (710, 740) mit der Einheit des Netzknotens kommuniziert, indem eine authentifizierte Kommunikation mit der Einheit des Netzknotens hergestellt wird.

3. Benutzergerät (100, 700) nach Anspruch 1, wobei der Sendeempfänger (710, 740) mit einer Vorrichtung kommuniziert, die mit der Vielzahl von Einheiten des Netzknotens verbunden ist, wobei der Sendeempfänger (710, 740) ferner mit einer entfernten Stelle kommuniziert, um eine Anwendung herunterzuladen, um eine Benutzerschnittstelle an dem Benutzergerät (100, 700) bereitzustellen und wobei die Benutzerschnittstelle dem Anzeigen der Interpretation des Fehlercodes dient.

4. System, umfassend:
einen Netzknoten, ferner umfassend:
eine Vielzahl von Einheiten (3100, 3200, 3300, 5100, 5200, 5300), die konfiguriert sind, um Betriebsstatusinformationen der Vielzahl von Einheiten (3100, 3200, 3300, 5100, 5200, 5300) des Netzknotens anzugeben; und
einen Sendeempfänger (5500), der konfiguriert ist, um die Angabe über eine drahtlose Kommunikationsverbindung zu kommunizieren, wobei die Angabe einem Benutzergerät (100, 700) als ein Fehlercode kommuniziert wird; und
ein Benutzergerät (100, 700) nach Anspruch 1.

5. System nach Anspruch 4, wobei jede aus der Vielzahl von Einheiten (3100, 3200, 3300, 5100, 5200, 5300) mit dem Sendeempfänger (710, 740) verbunden ist.

6. System nach Anspruch 4, ferner umfassend:
eine Vorrichtung, die mit jeder aus der Vielzahl von Einheiten (3100, 3200, 3300, 5100, 5200, 5300) und mit dem Sendeempfänger (710, 740) verbunden ist, wobei die Vorrichtung die Betriebsstatusinformationen von jeder aus der Vielzahl von Einheiten (3100, 3200, 3300, 5100, 5200, 5300) empfängt.

7. System nach Anspruch 6, wobei die von der Vorrichtung empfangenen Betriebsstatusinformationen eine Identität einer Einheit aus der Vielzahl von Einheiten (3100, 3200, 3300, 5100, 5200, 5300) in Verbindung mit den empfangenen Betriebsstatusinformationen beinhalten.

8. System nach Anspruch 6, wobei das Abrufen der Betriebsstatusinformationen aus einer Einheit aus der Vielzahl von Einheiten (3100, 3200, 3300, 5100, 5200, 5300) des Netzknotens ferner das Abrufen einer Identität der Einheit umfasst.

9. System nach Anspruch 4, wobei jede aus der Vielzahl von Einheiten (3100, 3200, 3300, 5100, 5200, 5300) von Funksignalinterferenz abgeschirmt ist.

10. Verfahren, durchgeführt durch ein Benutzergerät, zur Erfassung von Fehlern in einem Netzknoten, wobei das Verfahren die folgenden Schritte umfasst:
Herstellen einer drahtlosen Kommunikationsverbindung durch das Benutzergerät mit einer Einheit aus einer Vielzahl von Einheiten des Netzknotens;
Abrufen von Betriebsstatusinformationen aus der Einheit, wobei die Betriebsstatusinformationen ein Fehlercode sind;
Vergleichen des Fehlercodes mit gespeicherten Informationen;
Erhalten einer Interpretation des aus der Einheit abgerufenen Fehlercodes durch das Vergleichen, wobei das Erhalten der Interpretation zum Erhalten einer Beschreibung des abgerufenen Fehlercodes in einer natürlichen Sprache führt und wobei die natürliche Sprache Angaben aus reinem Text und Veranschaulichungen umfasst, entweder alleine oder in Kombination;
Bestimmen einer angemessener Maßnahme aus angemessener/angemessenen Maßnahme(n) als Reaktion auf das Vergleichen, unter Verwendung der erhaltenen Interpretation, wobei die erhaltene Interpretation Verbindungen zu Abschnitten eines Benutzerhandbuchs bereitstellt, in dem die angemessene(n) Maßnahme(n) spezifiziert ist/sind, und wobei die bestimmte angemessene Maßnahme das Zurücksetzen der Einheit oder das Anfordern, dass die Einheit ausgetauscht wird, umfasst;
Anzeigen der Beschreibung der Betriebsstatusinformation der Einheit in der natürlichen Sprache; und
Senden eines Befehls entsprechend der bestimmten angemessenen Maßnahme an die Einheit des Netzknotens.

11. Verfahren nach Anspruch 10, wobei das Verfahren ferner den Schritt des Empfehlens der unter Verwendung der Interpretation bestimmten angemessenen Maßnahme umfasst.

12. Verfahren nach Anspruch 10, wobei die gespeicherten Informationen innerhalb des Benutzergeräts gespeichert werden.

13. Verfahren nach Anspruch 10, wobei sich die gespeicherten Informationen an einer von dem Netzwerk zugänglichen Stelle befinden.

14. Verfahren nach Anspruch 10, ferner umfassend:
Erhalten von Betriebsstatusinformationen von der Vielzahl von Einheiten über eine Vorrichtung, die mit der Vielzahl von Einheiten des Netzknotens verbunden ist.

15. Verfahren nach Anspruch 10, wobei die Betriebsstatusinformationen eine Angabe eines Defekts in einem Teil der Einheit sind und der gesendete Befehl das Empfehlen des Erhalts eines Ersatzteils umfasst.

## Revendications

1. Équipement utilisateur (100, 700) comprenant :
un émetteur-récepteur (710, 740) configuré pour communiquer avec un noeud de réseau par l'intermédiaire d'une liaison de communication sans fil, dans lequel l'émetteur-récepteur (710, 740) comprend :
un moyen de réception (710) configuré pour récupérer des informations d'état opérationnel à partir d'une unité d'une pluralité d'unités du noeud de réseau, dans lequel les informations d'état opérationnel constituent un code d'erreur ; et
un moyen de transmission (740) ;
une mémoire (730) configurée pour stocker des informations correspondant à la pluralité d'unités du noeud de réseau ;
un processeur (720) configuré pour :
comparer le code d'erreur avec les informations stockées et interpréter le code d'erreur récupéré de l'unité du noeud de réseau par ladite comparaison, dans lequel l'interprétation obtenue amène le processeur (720) à être en outre configuré pour obtenir une description du code d'erreur récupéré dans un langage naturel, et dans lequel le langage naturel comprend des indications de texte brut et des illustrations, soit seules, soit en combinaison ; et
déterminer une action appropriée d'action(s) appropriée(s), en réponse à ladite comparaison, à l'aide de l'interprétation, dans lequel l'interprétation obtenue fournit des liens vers des parties d'un manuel d'utilisateur où l'action/les actions appropriée(s) est/sont spécifiée(s), et dans lequel l'action appropriée déterminée comprend la réinitialisation de l'unité ou la demande de remplacement de l'unité ; et
un affichage configuré pour afficher la description du code d'erreur dans le langage naturel, dans lequel le moyen de transmission (740) est configuré pour transmettre une commande, correspondant à l'action appropriée déterminée, à l'unité du noeud de réseau.

2. Équipement utilisateur (100, 700) selon la revendication 1, dans lequel l'émetteur-récepteur (710, 740) communique avec l'unité du noeud de réseau en établissant une communication authentifiée avec l'unité du noeud de réseau.

3. Équipement utilisateur (100, 700) selon la revendication 1, dans lequel l'émetteur-récepteur (710, 740) communique avec un dispositif connecté à la pluralité d'unités du noeud de réseau, dans lequel l'émetteur-récepteur (710, 740) communique en outre avec un emplacement à distance pour télécharger une application afin de fournir une interface utilisateur sur l'équipement utilisateur (100, 700), et dans lequel l'interface utilisateur est destinée à afficher l'interprétation du code d'erreur.

4. Système comprenant :
- un noeud de réseau comprenant en outre :
une pluralité d'unités (3100, 3200, 3300, 5100, 5200, 5300) configurées pour indiquer des informations d'état opérationnel de la pluralité d'unités (3100, 3200, 3300, 5100, 5200, 5300) du noeud de réseau ; et
un émetteur-récepteur (5500) configuré pour communiquer l'indication par l'intermédiaire d'une liaison de communication sans fil, dans lequel l'indication est communiquée sous la forme d'un code d'erreur à un équipement utilisateur (100, 700) ; et
- un équipement utilisateur (100, 700) selon la revendication 1.

5. Système selon la revendication 4, dans lequel chacune de la pluralité d'unités (3100, 3200, 3300, 5100, 5200, 5300) est associée à l'émetteur-récepteur (710, 740).

6. Système selon la revendication 4, comprenant en outre :
un dispositif connecté à chacune de la pluralité d'unités (3100, 3200, 3300, 5100, 5200, 5300) et à l'émetteur-récepteur (710, 740), dans lequel le dispositif reçoit les informations d'état opérationnel de chacune de la pluralité d'unités (3100, 3200, 3300, 5100, 5200, 5300).

7. Système selon la revendication 6, dans lequel les informations d'état opérationnel reçues du dispositif comprennent une identité d'une unité, de la pluralité d'unités (3100, 3200, 3300, 5100, 5200, 5300), associée aux informations d'état opérationnel reçues.

8. Système selon la revendication 6, dans lequel la récupération des informations d'état opérationnel à partir d'une unité de la pluralité d'unités (3100, 3200, 3300, 5100, 5200, 5300) du noeud de réseau comprend en outre la récupération d'une identité de l'unité.

9. Système selon la revendication 4, dans lequel chacune de la pluralité d'unités (3100, 3200, 3300, 5100, 5200, 5300) est protégée contre les interférences de signaux radio.

10. Procédé exécuté par un équipement utilisateur pour détecter des erreurs dans un noeud de réseau, le procédé comprenant les étapes :
d'établissement d'une liaison de communication sans fil par l'équipement utilisateur avec une unité d'une pluralité d'unités du noeud de réseau ;
de récupération d'informations d'état opérationnel à partir de l'unité, les informations d'état opérationnel constituant un code d'erreur ;
de comparaison du code d'erreur avec des informations stockées ;
d'obtention d'une interprétation du code d'erreur récupéré à partir de l'unité par ladite comparaison, dans lequel l'obtention de l'interprétation entraîne l'obtention d'une description du code d'erreur récupéré dans un langage naturel, et dans lequel le langage naturel comprend des indications de texte brut et des illustrations, soit seules, soit en combinaison ;
de détermination d'une action appropriée d'action(s) appropriée(s), en réponse à ladite comparaison, à l'aide de l'interprétation obtenue, dans lequel l'interprétation obtenue fournit des liens vers des parties d'un manuel d'utilisateur où l'action/les actions appropriée(s) est/sont spécifiée(s), et dans lequel l'action appropriée déterminée comprend la réinitialisation de l'unité ou la demande de remplacement de l'unité ;
d'affichage de la description des informations d'état opérationnel de l'unité dans le langage naturel ; et
de transmission d'une commande, correspondant à l'action appropriée déterminée, à l'unité du noeud de réseau.

11. Procédé selon la revendication 10, le procédé comprenant en outre l'étape de recommandation de l'action appropriée déterminée à l'aide de l'interprétation.

12. Procédé selon la revendication 10, dans lequel les informations stockées sont stockées à l'intérieur de l'équipement utilisateur.

13. Procédé selon la revendication 10, dans lequel les informations stockées sont à un emplacement accessible au réseau.

14. Procédé selon la revendication 10, comprenant en outre :
l'obtention d'informations d'état opérationnel à partir de la pluralité d'unités par l'intermédiaire d'un dispositif connecté à la pluralité d'unités du noeud de réseau.

15. Procédé selon la revendication 10, dans lequel les informations d'état opérationnel constituent une indication d'un défaut dans une partie de l'unité et la commande transmise comprend la recommandation de l'obtention d'une pièce de remplacement.
